# EUROPEAN PATENT SPECIFICATION

(11) **EP 4 199 701 B1**
(45) Date of publication and mention of the grant of the patent: **06.08.2025**
(21) Application number: 21858705.3
(22) Date of filing: 17.08.2021
(51) Int. Cl.: A01G 23/00, B66C 1/58, B66C 3/16, F15B 11/024, B60P 1/54, B60P 3/41, B66C 3/04

(54) **ADAPTIVE CONTROL OF A HYDRAULIC TIMBER GRIP ON A TIMBER HANDLING DEVICE**
ADAPTIVE STEUERUNG EINES HYDRAULISCHEN HOLZGRIFFS AUF EINER HOLZHANDHABUNGSVORRICHTUNG
COMMANDE ADAPTATIVE D'UNE PINCE HYDRAULIQUE POUR BOIS D'OEUVRE SUR UN DISPOSITIF DE MANIPULATION DE BOIS D'OEUVRE

(30) Priority: 20.08.2020 SE 2050966
(43) Date of publication of application: 28.06.2023
(73) Proprietor: Komatsu Forest AB, 907 04 Umeå (SE)
(72) Inventor: MÄKI, Fredrik, 913 41 OBBOLA (SE); LARSSON, Jonas, 907 49 UMEÅ (SE)
(74) Representative: Zacco Sweden AB
(86) International application number: PCT/SE2021/050798
(87) International publication number: WO 2022/039650

(56) References cited:
- DE-U1- 202018 101 807
- JP-A- 2020 075 808
- JP-A- 2020 075 808
- JP-A- H07 259 139
- JP-A- H07 259 139
- RU-C1- 2 671 802
- SU-A2- 933 617
- SU-A2- 933 617
- US-A- 4 379 674
- US-A1- 2010 083 651
- US-A1- 2014 360 349
- US-A1- 2015 016 934
- US-A1- 2015 016 934
- US-A1- 2019 063 039
- US-B2- 10 030 678
- US-B2- 10 072 678

## Description

### TECHNICAL FIELD

The present invention relates to a timber handling vehicle according to the pre-amble of claim 1.

The invention also relates to a timber grip according to the preamble of claim 10.

### BACKGROUND

In timber handling vehicles, an operator primarily uses a combination of two hydraulically manoeuvrable units, namely a crane and a timber grip for timber handling at a load compartment constituent in the timber handling vehicle. By means of the timber grip, a bundle of timber is localized, collected, captured and gripped with strong force with the grip hooks operating in pairs and comprised in the timber grip, whereby timber is loaded onto the load compartment of the timber handling vehicle as well as unloaded from same. Consequently, said crane and timber grip consume most of the hydraulic flow generated by a pump constituent in the vehicle during work. As a result, the operator of the vehicle may experience that the timber grip does not in a distinct manner respond to the operator's control command or that the timber grip has very long response times at closure and therefore does not grip around the timber in a fast and efficient manner, in particular if the crane is manoeuvred at the same time. This phenomenon, which is usually termed "puncturing" within hydraulics, means that the hydraulic pump that is comprised in the hydraulic system of the vehicle, via a control valve and pipes for the respective consumers, can only supply limited power to the respective consumers. Examples of timber handling vehicles and/or timber grips may be found in US2015/0016934A1, RU2671802C1, DE202018101807U1.

The power that is transferred in a hydraulic system is defined by the fluid pressure (N/m²) multiplied by the volume flow (m³/second). Due to long pipes over the crane and further to the timber grip that is attached at the farthest crane end, energy losses occur, in particular if the outermost knuckle-boom is also telescopically extendable. Long pipes also imply that the flow is limited and that power losses occur, which reduces the manoeuvrability of the timber grip in a manner that may not only be experienced as disturbing by the operator but also affects the operator's possibility of carrying out work with the timber grip at the load compartment in an efficient way. In the following, the term timber does not only refer to wood that is intended for sawing, but for example also forest waste, pulpwood and the like, which is to be handled correspondingly.

To solve this problem, it has been decided in prior art timber handling vehicles to minimize the problem of energy losses over the crane by over dimensioning the pump capacity of the hydraulic system somewhat and/or use hydraulic control valves of the proportional type and of the type that does not open fully, but only allows a limited amount of the flow, for example 75-80%, to pass through the valve to the consumer, whereby the remaining 20-25% of the flow is reserved for the other consumers. However, these measures are not only costly, but they also contribute to energy losses and unnecessary heat generation in the hydraulic system.

Consequently, there is a need for a timber handling vehicle that solves this problem and enables an operator to obtain "power as required" or makes it possible to adaptively adjust the power requirement by means of smart energy regulation of the hydraulic flow of the system in order to do the job of handling timber at a load compartment of a timber handling vehicle more efficiently.

### SUMMARY OF THE INVENTION

A first object of the present invention is thus to obtain a timber handling vehicle that makes it possible to handle timber with timber grips at a load compartment more efficiently. A second object of the invention is to obtain a timber handling vehicle that can adapt the response of the timber grip to the operator's control command, so that the work movements of the timber grip in the desired way correspond to the power requirement of the various work steps comprised by timber handling work at a load compartment, namely a first work step wherein the timber is localized, a second step in which the timber is collected by means of the grip hooks of the timber grip, a third work step whereby the collected timber is gripped via grabbing by the grip hooks of the timber grip against the timber. A third object of the invention is to offer smooth and for an operator virtually imperceptible start and stop functions in transitions between various operating modes of the timber grip in timber handling work.

According to a first embodiment of the invention, the hydraulic system of the timber handling vehicle includes a third pipe, which results in a regenerative fluid flow from the minus side to the plus side of the hydraulic cylinder, a valve means, which is arranged to the second pipe, and which valve means is configured to; drive in a first operating condition, where the valve means is closed and fluid flow from the minus side to the plus side of the hydraulic cylinder is directed via said third pipe, receive a pressure indication that indicates a pump feed pressure on the plus side of the hydraulic cylinder, determine whether the pump feed pressure is above a first operating condition threshold value and, if so, drive in a second operating condition, where the valve means is open, and fluid flow from the minus side of the hydraulic cylinder is directed to the tank.

According to a second embodiment of the invention, the valve means of the timber handling vehicle is further configured to; determine whether the pump feed pressure on the plus side of the hydraulic cylinder exceeds the first operating condition threshold value, but falls below a second operating condition threshold value, and, if so, vary the degree of opening in an intermediate transition area, where the fluid flow from the minus side to the plus side of the hydraulic cylinder at a predetermined regulation characteristic is gradually reduced as the pump feed pressure increases on the plus side of the hydraulic cylinder.

According to a third embodiment of the invention, the valve means of the timber handling vehicle is further configured to; determine whether the pump feed pressure on the plus side of the hydraulic cylinder exceeds the second operating condition threshold value, and, if so, drive in a third operating condition wherein the valve means is completely open and all fluid flow from the minus side of the hydraulic cylinder is directed to the tank.

According to a fourth embodiment of the invention, the valve means of the timber handling vehicle is configured so that a gradual transition between a first operating condition threshold value and a second operating conditions threshold value can be arranged at varying degree and gradually be reduced by regenerative operating duration or regenerative operating time.

According to a fifth embodiment a valve means included in the invention can be configured with a relatively long regenerative operating duration, where a gradual transition from the first to the second operating condition threshold value graphically forms a negative gradient, whose angular coefficient is calculated as a ratio for the pump pressure between the first and the second operating condition threshold value, respectively. According to the invention, said ratio should be below 0.5 (<0.5) for the transition not to have a negative effect on the operator's driving experience.

In a preferred embodiment of the invention, the ratio for the regenerative operating duration can be in the 0.3-0.1 interval.

### DESCRIPTION OF FIGURES

In the following, the invention is described in detail with reference to the accompanying drawings, in which;
Fig. 1 shows a perspective view of a timber handling vehicle in the form of a so-called forwarder, which at the free end of a crane carries a timber grip, which vehicle is configured with a hydraulic system for actuating of the closing movement of the timber grip according to the present invention;
Fig. 2 shows a perspective view of an end portion of a crane in which a timber grip is suspended wherein more specifically an enlarged hydraulic cylinder is shown, which is operatively coupled to the timber grip for actuating the timber grip between an open and closed state, respectively;
Fig. 3 shows a diagram of a regenerative hydraulic circuit of the hydraulic system for actuating the hydraulic cylinder operatively coupled to the timber grip
Fig. 4 is a curve graphically showing control characteristics of the regenerative hydraulic circuit that is included in the invention and how it varies with the various work steps comprised in the work with a timber grip of a timber handling vehicle according to the invention as well as how a regenerative operating duration in transition from 100% regenerative operation to 0% regenerative operation can optionally be controlled by an angular coefficient chosen for the gradient.

### DESCRIPTION OF EMBODIMENTS

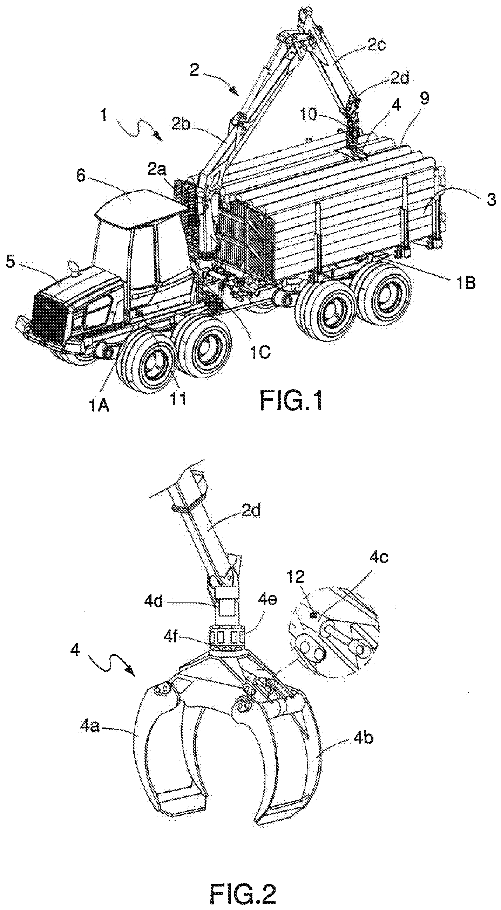

Fig. 1 shows a timber handling vehicle 1 according to the invention, which is hereby constituted by a forwarder, but which could obviously comprise any vehicle equipped with a crane 2 and a load compartment 3 carrying, at a free end of said crane, about a vertical shaft a pivotable timber grip 4 for handling of timber. In an alternative embodiment, the timber handling vehicle could comprise a timber car or the like.

The timber handling vehicle 1 includes a front 1A respectively rear 1B vehicle unit, which is articulately joined via a steering joint 1C. On its respective chassis, the front vehicle unit 1A carries a superstructure, mainly comprising a drive motor 5, a driver's cabin 6 and a hydraulic system 11, while the rear vehicle unit 1B carries a superstructure, mainly comprising said crane 2 and said load compartment 3 for timber 9. At the free end of the crane 2, said timber grip 4 is pivotably suspended via an articulation 10.

For positioning of the boom-tip and thereby the timber grip 4, the crane 2 comprises both a supporting body 2a or pillar, with which a lifting arm 2b is articulated, with which in turn a knuckle-boom 2c is articulated, which in turn may comprise a number of telescopic projections 2d for increasing the range. For swinging laterally, the crane body 2a is pivotably accommodated in a crane foot, which is attached in the chassis of the rear vehicle unit 1B. The respective parts of the crane 2 are pivotable in height by means of hydraulic cylinders, which are supplied with hydraulic fluid via hoses or pipes, which normally extend through the body and associated crane parts. The crane body 2a includes a toothed rim, which for swinging of the crane 2 at a horizontal plane on the rear vehicle unit 1B is affected by a hydraulic motor (not shown) equipped with a toothed rim.

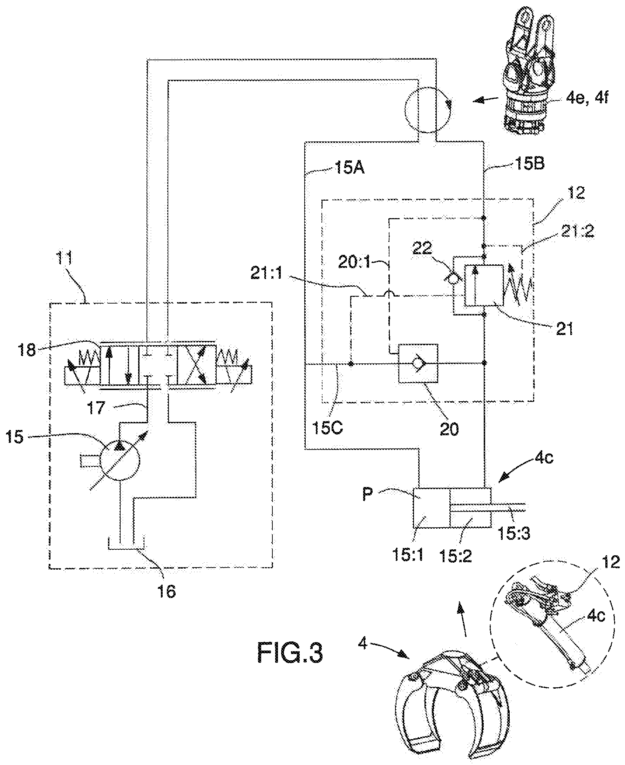

As most clearly appears from Fig. 2, the timber grip 4 includes grip hooks 4a, 4b operating in pairs and a double-acting hydraulic cylinder 4c (see detail enlargement in Fig. 2), which hydraulic cylinder is operatively coupled to the timber grip for the grip hooks to be separately pivotable for a receiving or collecting state for the timber and pivotably together for a timber-gripping state with force. As the area of the piston included in the hydraulic cylinder 4c is larger on its piston side than its piston rod side (see also Fig. 3), the hydraulic cylinder 4c is stronger in its outgoing movement and thus configured to move outwardly in the gripping state of the timber grip 4. The hydraulic cylinder 4c of the timber grip 4 is supplied with hydraulic fluid, which via hoses or pipes that travel in a compartment inside the hollow interior (not shown) of the crane 2 and extend further out through an opening at the free end of the crane 2, with a respective end connected to couplings in the timber grip (not shown). To enable the timber grip 4 to be oriented in the desired state through twisting about said vertical shaft, the suspension device 4d with which the timber grip is attached to the crane end is provided with a rotator 4e, which is affected by a hydraulic motor (not shown) that is supplied with drive flow via a swivel coupling 4f integrated in the rotator.

Referring to Fig. 3, it schematically shows the hydraulic system 11, 12 included in a timber handling vehicle 1 according to the invention, whereby the components in the field with the dotted line 11 comprise part of an available hydraulic system on the timber handling vehicle 1, while the components in the field with the dotted line 12 can, but does not necessarily have to, be included in the hydraulic system 11 on the timber vehicle. In an alternative embodiment of the invention, said components 12 can in a discrete way be integrated in the timber grip 4.

In an alternative embodiment of the invention, said components could be integrated as part of the double-acting hydraulic cylinder 4c of the timber grip. An example of such embodiment can be seen in more detail if the detail enlargement in Fig. 3 is studied closely.

The hydraulic system 11, 12 includes a pressure medium source in the form of a pump 15 that is driven by said drive motor 5 and sucks the hydraulic fluid from a tank 16, which fluid feeds a pressure pipe 17. The pressure pipe 17 is connected with a control valve 18 operable by an operator of the four-way three-state valve type for distribution of the hydraulic fluid to the hydraulic cylinder 4c of the timber grip 4 for actuating the grip hooks 4a, 4b of the timber grip. Said control valve 18 is included in the valve block (not shown) accommodated in the front vehicle unit 1A of the timber handling vehicle 1.

Depending on the set state, the control valve 18 can thus selectively deliver a pressurized fluid flow to a plus side 15:1 of the hydraulic cylinder 4c via a first pipe 15A connected to the hydraulic cylinder respectively to a minus side 15:2 of the hydraulic cylinder 4c via a second pipe 15B connected to the hydraulic cylinder. In the following, the plus side 15:1 means the hydraulic cylinder's 4c first pressure space, which has a larger area, and the minus side 15:2 is the hydraulic cylinder's second smaller pressure space, though which a piston rod extends included in the hydraulic cylinder 4c.

In the field 12, 15C denotes a third pipe forming a by-pass with which hydraulic fluid, according to the invention, can be regenerated by flowing directly from the minus side 15:2 of the hydraulic cylinder to its plus side 15:1 instead of taking a detour via the tank 16. A first non-return valve is denoted 20, which is arranged to said third pipe 15C in order to restrain a fluid flow from the plus side 15:1 of the hydraulic cylinder 4c to the minus side 15:2 and further on to the tank 16. A valve means denoted 21 is arranged to the second pipe 15B.

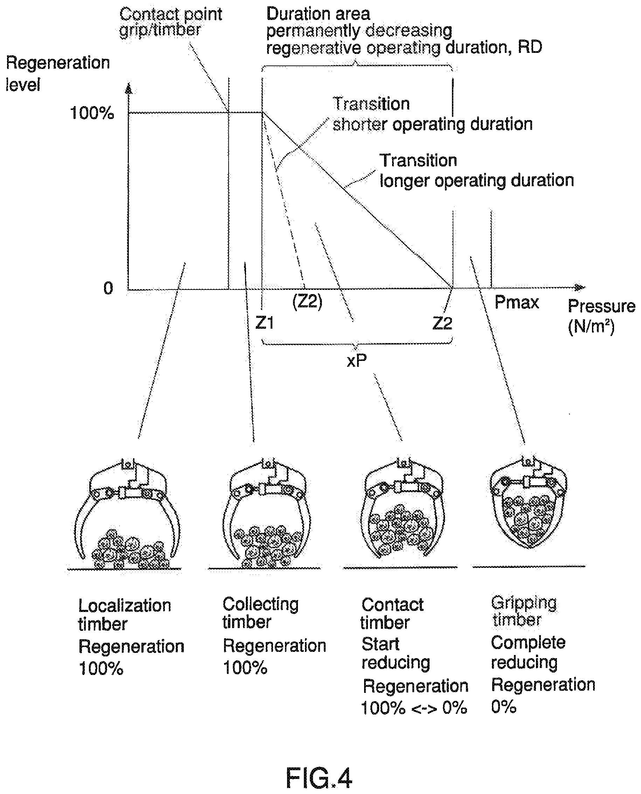

According to the invention, the valve means 21 is configured to drive the hydraulic system in a first operating condition, wherein the valve means is closed and the fluid flow from the hydraulic cylinder's 4c minus side 15:2 to the plus side 15:1 is directed via said third pipe 15C. The valve means 21 is pressure-sensing and via a first pilot pipe 21:1, it is arranged to receive a pressure indication, indicating a pump feed pressure P on the plus side 15:1 of the hydraulic cylinder 4c and to determine, whether the pump feed pressure P is above a first operating condition threshold value Z1 (see also Fig. 4) and, if so, drive the hydraulic system in a second operating condition, wherein the valve means 21 is open, and fluid flow from the hydraulic cylinder's 4c minus side 15:2 is directed to the tank 16. As long as the pump feed pressure P on the plus side 15:1 of the hydraulic cylinder is below the first operating condition threshold value Z1, the regeneration degree is 100%.

Furthermore, the valve means 21 can also be configured to determine whether the pump feed pressure P on the plus side 15:1 of the hydraulic cylinder 4c exceeds the first operating condition threshold value Z1, but is below a second operating condition threshold value Z2, and, if so, vary the degree of opening in an intermediate transition area, wherein the fluid flow from the minus side 15:2 to the plus side 15:1 of the hydraulic cylinder at a predetermined regulation characteristic at a predetermined duration is gradually reduced as a consequence of a negative gradient as the pump feed pressure P increases on the plus side 15:1 of the hydraulic cylinder 4c (see also Fig. 4).

Fig. 3 denotes the piston rod of the hydraulic cylinder 4c 15:3, wherein according to the differential piston principle, the selected diameter of the piston rod and the piston area on the piston rod side relative to the area on the piston side will affect the operator's experience of the timber grip 4 behaviour at fast pace under the first operating condition threshold value Z1, i.e. where the timber grip is substantially unloaded. Similarly, according to the invention, it is essential that the transition between the first and the second operating condition threshold values Z1, Z2 experienced by the operator has such long duration or time that in terms of dimension is adapted so that the operator does not experience problems with the timber grip 4 losing gripping force at the end of a gripping cycle.

According to the invention, the pressure-sensing valve means 21 is configured to be arranged at varying degree of longer or shorter duration by beforehand configuring the regulation characteristic of the valve means in the form of a negatively decreasing curve or a negative gradient as a downwardly inclined straight line between said first and second operating condition threshold values Z1, Z2.

On closer review of the negative gradient in the diagram in Fig. 4, which graphically illustrates a selected longer or shorter duration, it should be understood that a desired alternative pressure can be achieved as a predetermined ratio based on a selected pump feed pressure relationship xP between the pump feed pressure P at the first operating condition threshold value Z1 and at the second operating condition threshold value Z2. For example, at a pump feed pressure P= 21 MPa (200 bar) at Z2 and a duration with a selected ratio of for example ¼, a pump feed pressure of approx. 5 MPa (50 bar) is obtained as an alternating pressure for Z1 at transition from 100% regenerative operation, which along said curve or gradient gradually and relatively slowly is reduced to 0% regenerative operation at Z2.

According to the invention, the valve means 21 can be configured to provide a relatively long regenerative operating duration RD, where a gradual transition from the first operating condition threshold value Z1 and the second operating condition threshold value Z2 graphically forms a negatively decreasing curve or gradient, whose regenerative operating duration RD is controlled by an angular coefficient selected for the gradient calculated as a ratio (Z1/Z2) between the first operating condition threshold value Z1 and the second operating condition threshold value Z2. According to the invention, said ratio should be below 0.5 (<0.5) for the transition not to have a negative effect on the operator's driving experience and work capacity at timber handling. In a preferred embodiment of the invention, the ratio (Z1/Z2) between the first operating condition threshold value Z1 and the second operating condition threshold value Z2 for the regenerative operating duration RD can be in the 0.3-0.1 interval.

In an embodiment of the invention shown in Fig. 3, the valve means 21 can be equipped with variable setting of the valve spring and therefore the regulation characteristic can also be configured to alternate in the desired way between the first operating condition threshold value Z1 and the second operating condition threshold value Z2. In another alternative embodiment of the invention, the valve means 21 can be configurable by a valve with suitable pre-selected flow characteristic.

In a timber vehicle according to the present invention, it has proven suitable to select a ratio for an alternating pressure at the pump pressure P between the first operating condition threshold value Z1 and the second operating condition threshold value Z2, i.e. (Z1/Z2), which is below ½ and preferably is in the 1/3-1/4 range or the 1/3-1/10 range.

The valve means 21 can further be configured to determine whether the pump feed pressure P on the plus side 15:1 of the hydraulic cylinder 4c exceeds the second operating condition threshold value Z2, and, if so, drive in a third operating condition wherein the valve means 21 is completely open and substantially all fluid flow from the minus side 15:2 of the hydraulic cylinder 4c is directed to the tank 16. In this state, the hydraulic system 11, 12 works in the conventional manner without regeneration. Thus, the regeneration degree is zero.

In an embodiment of the invention, the valve means 21 can include an adjustable (variable) valve means 21 of the pressure-sensing type, which via said pilot pipe 21:1 is sensitive to a pump feed pressure P on the hydraulic cylinder's 4c plus side, wherein the indicated amount of fluid flow from the hydraulic cylinder's 4c minus side 15:2 to the plus side 15:1 is automatically regulated through the degree of opening of the valve means (21), in which the valve means 21 is configured to direct all fluid flow (100% regeneration) from the hydraulic cylinder's 4c minus side 15:2 to the plus side 15:1, when the hydraulic cylinder 4c operates at a pressure on the plus side, which is below a predetermined first operating condition threshold value Z1 (see also Fig. 4). A second non-return valve is denoted 22, which is arranged to said second pipe 15B, in parallel with the valve means 21, to restrain the fluid flow to the tank, but to allow a fluid flow with pump feed pressure P via the control valve 18 to the hydraulic cylinder's 4c minus side to cause the hydraulic cylinder to perform minus strokes and thereby move to a compressed state.

As appears from the hydraulic scheme in Fig. 3, said first non-return valve 20 can be of a remotecontrolled type, in which, through the influence of a pilot pipe 20:1, it is sensitive to a pump feed pressure P in the second pipe 15B. When sensing a predetermined pump feed pressure P in the second pipe 15B of the hydraulic cylinder 4c, the non-return valve 20 closes off the fluid flow from the hydraulic cylinder's 4c minus side 15:2 to its plus side 15:1. A second pilot pipe included in the valve means 21 is denoted 21:2 for draining of the valve means 21 to avoid problems with occurring counter-pressure at switching of the control valve 18 to a state for delivery of fluid flow from the pump 15 to the hydraulic cylinder's 4c minus side 15:2 at switching of the hydraulic cylinder 4c to a compressed state and thereby the timber grip 4 to an open state.

In an alternative embodiment of the invention, said adjustable and pressure-sensing valve means 21 can be constituted by a three-port load-holding valve of the pilot type with integrated non-return valve and drainage to avoid the problems with counter-pressure mentioned above. In this context, it should be understood that the pump pressure P on the hydraulic cylinder's 4c plus side 15:1 controls the degree of opening of the current load-holding valve. In yet another alternative embodiment, said load-holding valve 21 can be provided with variable regulation characteristic. The load-holding valve 21 can advantageously be of a balanced execution to be able to control the movement in a manner that rather corresponds to a more advanced PWM-pulse controlled proportional valve.

Fig. 4 illustrates an example of how a timber handling vehicle according to the invention can work with handling timber 9 with a timber grip 4 at the load compartment 3 of the vehicle. The operator of the vehicle displaces the crane 2 and thereby the timber grip 4, so that it is located right above the timber 9 to be handled with respect to the load compartment 3 of the vehicle.

### Localization of timber

In a first work step, the timber grip 4 "runs empty" in which step, the timber 9 in the load compartment 2 is localized. The grip hooks 4a, 4b of the timber grip 4 here pivot separately to a timber-receiving state, wherein the hydraulic cylinder 4c is in its shortest compressed state with the piston at a bottom state. The minus chamber 15:2 of the hydraulic cylinder 4c is thus completely filled with fluid, while the plus chamber 15:1 is emptied for fluid contents, which should be realized if the schematically shown hydraulic cylinder in Fig. 3 is studied closely. Thus, the regeneration degree in the hydraulic cylinder 4c of the timber grip 4 is 100%.

### Collection of timber

In a second work step, the operator begins to close the timber grip 4. As long as the pump pressure P on the hydraulic cylinder's 4c plus side 15:1 is lower than the alternating pressure, i.e. P < Z1, the timber grip 4 function is 100% regenerative, wherein the grip 4, due to the differential piston principle and because both chambers 15:1, 15:2 of the hydraulic cylinder 4c are pressurized, the piston of the hydraulic cylinder and thus the timber grip hooks 4a, 4b will move at fast pace, but at lower force due to the differential relationship as long as the piston is substantially unloaded. Consequently, all fluid is directed from the hydraulic cylinder's 4c minus side 15:2 to the plus side 15:1 via the third pipe 15C and the non-return valve 20. No flow is directed via the second pipe 15B back to the tank 16.

### Contact with and capture of timber

In this third work step, the timber grip 4 begins to move timber 9 from the sides of the load compartment 9 and further in towards the central middle of the timber grip. The pump pressure P on the hydraulic cylinder's 4c plus side 15:1 is still below the alternating pressure Z1, and the function is 100% regenerative, wherein the timber grip 4 grip hooks 4a, 4b move towards each other at fast pace.

### Gripping the timber - Start reducing

In the fourth work step, the timber grip 4 has collected sufficient timber 9 for the load to result in the pump pressure P on the hydraulic cylinder's 4c plus side 15:1 to exceed the alternative pressure Z1. The valve means 21 ensures that the second pipe 15B, i.e. the return pipe to the tank 16 opens proportionally by the valve means' 21 first pilot pipe 21:1 on the plus side 15:1 beginning to become pressurized. The fluid flow in the second pipe 15B (the return pipe) increases successively concurrently with the fluid flow over the third pipe 15C and the non-return valve 20 decreasing correspondingly. The speed of the function decreases correspondingly. Due to the long transition area between the duration limits defined between the first operating condition threshold value Z1 and the second operating condition threshold value Z2 according to the invention, the operator will in practice not notice the speed reduction of the timber grip 4 when it alternates between said respective operating states. Due to the valve means 21 being variable, it is possible to vary the duration limits and thus choose a gradual transition and desired angular coefficient for the negative gradient with shorter or longer duration between both alternating pressures Z1, Z2, which is illustrated graphically in the diagram in Fig. 4.

### End of transition - double-acting

The pump pressure P on the hydraulic cylinder's 4 plus side 15:1 has obtained a predetermined setting pressure Z2. The valve means 21 is completely open and no flow runs via the third pipe 15C and the non-return valve 2. The speed of the piston and hence the timber grip 4 at grip movement has reduced the piston area ratio correspondingly. The area against which the pump pressure P acts, corresponds to the entire area of the piston.

### Gripping the timber with holding force

The grip movement of the timber grip 4 is completed, whereby the maximum pump pressure Pmax for the function has been obtained. The timber 9 is thus held at full holding force in the timber grip 4.

### Opening of the timber grip - minus stroke

Through switching of the control valve 18, the pump pressure P is directed out into the second pipe 15B, whereby the hydraulic cylinder's 4 minus side 15:2 is pressurized concurrently with the plus side 15:1 being connected to the tank 16. The fluid flow is prevented from flowing from the hydraulic cylinder's 4c minus side 15:2 to the plus side 15:1 by pressurization of the non-return valve's 20 pilot pipe 20:1 from the minus side. At the hydraulic cylinder's 4 minus stroke, fluid flows past the valve means 21 via the parallel non-return valve function 22.

## Claims

1. A timber handling vehicle (1), including a load compartment (3) for timber (9), a crane (2) with a timber grip (4) for handling of timber to and from the load compartment, a hydraulic cylinder (4c) for actuating the timber grip,
a hydraulic system (11, 12) having a motor-driven pump (15), a tank (16) for a fluid as well as a control valve (18) with which a fluid flow set under pump feed pressure (P) can be selectively supplied to a plus side (15:1) of the hydraulic cylinder via a first pipe (15A) connected to same, respectively a minus side (15:2) via a second pipe (15B) connected to same,
**characterised in that** the hydraulic system (11, 12) has
a third pipe (15C), which results in a regenerative fluid flow from the minus side (15:2) to the plus side (15:1) of the hydraulic cylinder (4c),
a pressure-sensing valve means (21), which is arranged to the second pipe (15B), and which
valve means (21) is configured to;
drive in a first operating condition, wherein the valve means (21) is closed and the fluid flow from the minus side (15:2) to the plus side (15:1) of the hydraulic cylinder (4c) is directed via said third pipe (15C),
receive a pressure indication, indicating a pump feed pressure (P) on the hydraulic cylinder's (4c) plus side (15:1),
determine whether the pump feed pressure (P) exceeds a first operating condition threshold value (Z1), and, if so, drive in a second operating condition, wherein the valve means (21) is open and fluid flow from the hydraulic cylinder's (4c) minus side (15:2) is directed to the tank 16 wherein the valve means (21) is configured to;
determine whether the pump feed pressure (P) on the hydraulic cylinder's plus side (15:1) exceeds the first operating condition threshold value (Z1), but is below a second operating condition threshold value (Z2), and, if so, vary the degree of opening in an intermediate transition area, wherein the fluid flow from the minus side (15:2) to the plus side (15:1) of the hydraulic cylinder (4c) at a predetermined regulation characteristic is gradually reduced as the pump feed pressure (P) increases on the plus side (15:1) of the hydraulic cylinder (4c)

2. A timber handling vehicle (1) according to claim 1, wherein the pressure-sensing valve means (21) further is configured to;
determine whether the pump feed pressure (P) on the plus side (15:1) of the hydraulic cylinder (4c) exceeds the second operating condition threshold value (Z2), and, if so, drive in a third operating condition, wherein the valve means (21) is completely open and all fluid flow from the minus side (15:2) of the hydraulic cylinder (4c) is directed to the tank (16).

3. A timber handling vehicle (1) according to any one of claims 1-2, including a first non-return valve (20), which is arranged to the third pipe (15C) to restrain fluid flow from the plus side (15:1) to the minus side (15:2) of the hydraulic cylinder (4c).

4. A timber handling vehicle (1) according to claim 3, wherein said first non-return valve (20) is sensitive to a fluid flow with a pump feed pressure (P) in the hydraulic cylinder's (4c) second pipe (15B), in which condition the third pipe (15C) via acting of the non-return valve is blocked for fluid flow.

5. A timber handling vehicle (1) according to any one of claims 1 - 4, including a second non-return valve (22), which is arranged in parallel with the pressure-sensing valve means (21) for directing a fluid flow with a pump feed pressure (P) in the second pipe (15B) past the pressure-sensing valve means (21) and further on to the minus side (15:2) of the hydraulic cylinder.

6. A timber handling vehicle (1) according to any one of claims 1 - 5, wherein the pressure-sensing valve means (21) is configured with a permanently gradually decreasing regenerative operating duration (RD) based on a pump feed pressure relationship (xP) between the first operating condition threshold value (Z1) and the second operating condition threshold value (Z2) that is below 0.5 (<0.5).

7. A timber handling vehicle (1) according to claim 6, wherein the gradually decreasing time of regenerative operating duration (RD) is based on a pump feed pressure ratio (xP) between the first operating condition threshold value (Z1) and the second operating condition threshold value (Z2) in the 0.3-0.1 interval.

8. A timber handling vehicle (1) according to any one of claims 1 - 7, wherein the pressure-sensing valve means (21) includes a load-holding valve.

9. A timber handling vehicle (1) according to claim 8, wherein the load-holding value is of a balanced execution.

10. A timber grip (4), including a hydraulic cylinder (4c) for actuating the timber grip, and a hydraulic system (12), comprising,
a first pipe (15A) connected to a plus side (15:1) of the hydraulic cylinder,
a second pipe (15B) connected to a minus side (15:2) of the hydraulic cylinder **characterised in that** the hydraulic system (12) has,
a third pipe (15C), which results in a regenerative fluid flow from the hydraulic cylinder's (4c) minus side (15:2) to the plus side (15:1),
a pressure-sensing valve means (21), which is arranged to the second pipe (15B), and which valve means (21) is configured to;
drive in a first operating condition, wherein the valve means (21) is closed and the fluid flow from the minus side (15:2) to the plus side (15:1) of the hydraulic cylinder is directed via said third pipe (15C),
receive a pressure indication, indicating a pump feed pressure (P) on the hydraulic cylinder's (4c) plus side (15:1),
determine whether the pump feed pressure (P) exceeds a first operating condition threshold value (Z1), and, if so, drive in a second operating condition wherein the valve means (21) is open and fluid flow from the minus side (15:2) of the hydraulic cylinder (4c) is intended to be directed to a tank 16,
determine whether the pump feed pressure (P) exceeds a second operating condition threshold value (Z2) and, if so, completely open said valve means (21),
as long as the pump feed pressure (P) exceeds the first operating condition threshold value (Z1), but is below the second operating condition threshold value (Z2) obtain a permanently gradually decreasing regenerative operating duration (RD) based on a pre-selected pump feed pressure relationship (xP) between the first operating condition threshold value (Z1) and the second operating condition threshold value (Z2), being below 0.5 (<0.5) or preferably in the 0.3-0.1 interval.

## Patentansprüche

1. Holzhandhabungsfahrzeug (1), beinhaltend einen Laderaum (3) für Holz (9), einen Kran (2) mit einem Holzgriff (4) zum Umschlagen von Holz in den und aus dem Laderaum, einen Hydraulikzylinder (4c) zum Betätigen des Holzgriffs,
ein Hydrauliksystem (11, 12) mit einer motorbetriebenen Pumpe (15), einem Tank (16) für ein Fluid sowie einem Steuerventil (18), mit dem ein Fluidstrom, der unter Pumpenzufuhrdruck (P) eingestellt wird, selektiv einer Plusseite (15:1) des Hydraulikzylinders über ein erstes Rohr (15A), das mit dieser verbunden ist, bzw. einer Minusseite (15:2) über ein zweites Rohr (15B), das mit dieser verbunden ist, zugeführt wird,
**dadurch gekennzeichnet, dass** das Hydrauliksystem (11, 12) Folgendes aufweist:
ein drittes Rohr (15C), das zu einem regenerativen Fluidstrom von der Minusseite (15:2) zu der Plusseite (15:1) des Hydraulikzylinders (4c) führt,
eine Druckerfassungsventileinrichtung (21), die an dem zweiten Rohr (15B) angeordnet ist, und wobei die Ventileinrichtung (21) zu Folgendem konfiguriert ist:
Arbeiten unter einer ersten Betriebsbedingung, wobei die Ventileinrichtung (21) geschlossen ist und der Fluidstrom von der Minusseite (15:2) zu der Plusseite (15:1) des Hydraulikzylinders (4c) durch das dritte Rohr (15C) geleitet wird,
Empfangen einer Druckangabe, die einen Pumpenzufuhrdruck (P) an der Plusseite (15:1) des Hydraulikzylinders (4c) angibt,
Bestimmen, ob der Pumpenzufuhrdruck (P) einen ersten Betriebsbedingungsschwellenwert (Z1) überschreitet, und, wenn dies der Fall ist, Arbeiten unter einer zweiten Betriebsbedingung, wobei die Ventileinrichtung (21) offen ist und der Fluidstrom von der Minusseite (15:2) des Hydraulikzylinders (4c) zu dem Tank 16 geleitet wird, wobei die Ventileinrichtung (21) zu Folgendem konfiguriert ist:
Bestimmen, ob der Pumpenzufuhrdruck (P) an der Plusseite (15:1) des Hydraulikzylinders den ersten Betriebsbedingungsschwellenwert (Z1) überschreitet, aber unter einem zweiten Betriebsbedingungsschwellenwert (Z2) liegt, und,
wenn dies der Fall ist, Variieren des Öffnungsgrads in einem Zwischenübergangsbereich, wobei der Fluidstrom von der Minusseite (15:2) zu der Plusseite (15:1) des Hydraulikzylinders (4c) mit einer vorbestimmten Regelcharakteristik allmählich reduziert wird, wenn der Pumpenzufuhrdruck (P) an der Plusseite (15:1) des Hydraulikzylinders (4c) zunimmt.

2. Holzhandhabungsfahrzeug (1) nach Anspruch 1, wobei die Druckerfassungsventileinrichtung (21) ferner zu Folgendem konfiguriert ist:
Bestimmen, ob der Pumpenzufuhrdruck (P) an der Plusseite (15:1) des Hydraulikzylinders (4c) den zweiten Betriebsbedingungsschwellenwert (Z2) überschreitet, und, wenn dies der Fall ist, Arbeiten unter einer dritten Betriebsbedingung, wobei die Ventileinrichtung (21) vollständig offen ist und der gesamte Fluidstrom von der Minusseite (15:2) des Hydraulikzylinders (4c) zu dem Tank (16) geleitet wird.

3. Holzhandhabungsfahrzeug (1) nach einem der Ansprüche 1-2, beinhaltend ein erstes Rückschlagventil (20), das an dem dritten Rohr (15C) angeordnet ist, um den Fluidstrom von der Plusseite (15:1) zu der Minusseite (15:2) des Hydraulikzylinders (4c) zurückzuhalten.

4. Holzhandhabungsfahrzeug (1) nach Anspruch 3, wobei das erste Rückschlagventil (20) gegenüber einem Fluidstrom mit einem Pumpenzufuhrdruck (P) in dem zweiten Rohr (15B) des Hydraulikzylinders (4c) empfindlich ist, unter welcher Bedingung das dritte Rohr (15C) durch Wirken des Rückschlagventils für den Fluidstrom blockiert ist.

5. Holzhandhabungsfahrzeug (1) nach einem der Ansprüche 1-4, beinhaltend ein zweites Rückschlagventil (22), das parallel zu der Druckerfassungsventileinrichtung (21) angeordnet ist, um einen Fluidstrom mit einem Pumpenzufuhrdruck (P) in dem zweiten Rohr (15B) an der Druckerfassungsventileinrichtung (21) vorbei und weiter zu der Minusseite (15:2) des Hydraulikzylinders zu leiten.

6. Holzhandhabungsfahrzeug (1) nach einem der Ansprüche 1-5, wobei die Druckerfassungsventileinrichtung (21) mit einer permanent allmählich abnehmenden regenerativen Betriebsdauer (RD) basierend auf einer Pumpenzufuhrdruckbeziehung (xP) zwischen dem ersten Betriebsbedingungsschwellenwert (Z1) und dem zweiten Betriebsbedingungsschwellenwert (Z2) unter 0,5 (<0,5) konfiguriert ist.

7. Holzhandhabungsfahrzeug (1) nach Anspruch 6, wobei die allmählich abnehmende Zeit der regenerativen Betriebsdauer (RD) auf einem Pumpenzufuhrdruckverhältnis (xP) zwischen dem ersten Betriebsbedingungsschwellenwert (Z1) und dem zweiten Betriebsbedingungsschwellenwert (Z2) im Intervall von 0,3-1,0 basiert.

8. Holzhandhabungsfahrzeug (1) nach einem der Ansprüche 1-7, wobei die Druckerfassungsventileinrichtung (21) ein Lasthalteventil beinhaltet.

9. Holzhandhabungsfahrzeug (1) nach Anspruch 8, wobei der Lasthaltewert eine ausgeglichene Ausführung aufweist.

10. Holzgriff (4), beinhaltend einen Hydraulikzylinder (4c) zum Betätigen des Holzgriffs und ein Hydrauliksystem (12), umfassend ein erstes Rohr (15A), das mit einer Plusseite (15:1) des Hydraulikzylinders verbunden ist,
ein zweites Rohr (15B), das mit einer Minusseite (15:2) des Hydraulikzylinders verbunden ist,
**dadurch gekennzeichnet, dass** das Hydrauliksystem (12) Folgendes aufweist:
ein drittes Rohr (15C), das zu einem regenerativen Fluidstrom von der Minusseite (15:2) zu der Plusseite (15:1) des Hydraulikzylinders (4c) führt,
eine Druckerfassungsventileinrichtung (21), die an dem zweiten Rohr (15B) angeordnet ist, und wobei die Ventileinrichtung (21) zu Folgendem konfiguriert ist:
Arbeiten unter einer ersten Betriebsbedingung, wobei die Ventileinrichtung (21) geschlossen ist und der Fluidstrom von der Minusseite (15:2) zu der Plusseite (15:1) des Hydraulikzylinders (4c) durch das dritte Rohr (15C) geleitet wird,
Empfangen einer Druckangabe, die einen Pumpenzufuhrdruck (P) an der Plusseite (15:1) des Hydraulikzylinders (4c) angibt,
Bestimmen, ob der Pumpenzufuhrdruck (P) einen ersten Betriebsbedingungsschwellenwert (Z1) überschreitet, und, wenn dies der Fall ist, Arbeiten unter einer zweiten Betriebsbedingung, wobei die Ventileinrichtung (21) offen ist und der Fluidstrom von der Minusseite (15:2) des Hydraulikzylinders (4c) zu einem Tank 16 geleitet werden soll,
Bestimmen, ob der Pumpenzufuhrdruck (P) einen zweiten Betriebsbedingungsschwellenwert (Z2) überschreitet, und, wenn dies der Fall ist, vollständiges Öffnen der Ventileinrichtung (21),
solange der Pumpenzufuhrdruck (P) den ersten Betriebsbedingungsschwellenwert (Z1) überschreitet, aber unter dem zweiten Betriebsbedingungsschwellenwert (Z2) liegt, Erhalten einer permanent allmählich abnehmenden regenerativen Betriebsdauer (RD) basierend auf einer vorausgewählten Pumpenzufuhrdruckbeziehung (xP) zwischen dem ersten Betriebsbedingungsschwellenwert (Z1) und dem zweiten Betriebsbedingungsschwellenwert (Z2) unter 0,5 (<0,5) oder vorzugsweise im Intervall von 0,3-1,0.

## Revendications

1. Véhicule de manutention de bois (1), comprenant un compartiment de chargement (3) pour le bois (9), une grue (2) avec une pince à bois (4) pour la manutention du bois vers et depuis le compartiment de chargement, un vérin hydraulique (4c) pour actionner la pince à bois, un système hydraulique (11, 12) comprenant une pompe motorisée (15), un réservoir (16) pour un fluide ainsi qu'une vanne de régulation (18) avec laquelle un débit de fluide réglé sous la pression d'alimentation de la pompe (P) peut être appliqué sélectivement à un côté positif (15:1) du vérin hydraulique via un premier tuyau (15A) raccordé à celui-ci, respectivement à un côté négatif (15:2) via un deuxième tuyau (15B) raccordé à celui-ci,
**caractérisé en ce que** le système hydraulique (11, 12) comporte un troisième tuyau (15C), qui entraîne un écoulement de fluide régénératif du côté négatif (15:2) vers le côté positif (15:1) du vérin hydraulique (4c),
un moyen de soupape de détection de pression (21), qui est disposé sur le deuxième tuyau (15B), et lequel moyen de soupape (21) est configuré pour :
conduire dans un premier état de fonctionnement, dans lequel le moyen de soupape (21) est fermé et l'écoulement de fluide du côté négatif (15:2) au côté positif (15:1) du vérin hydraulique (4c) est dirigé via ledit troisième tuyau (15C),
recevoir une indication de pression, indiquant une pression d'alimentation de la pompe (P) sur le côté positif (15:1) du vérin hydraulique (4c),
déterminer si la pression d'alimentation de la pompe (P) dépasse une première valeur seuil de condition de fonctionnement (Z1) et, si tel est le cas, conduire dans une deuxième condition de fonctionnement dans laquelle le moyen de soupape (21) est ouvert et le débit de fluide du côté négatif (15:2) du vérin hydraulique (4c) est dirigé vers le réservoir (16) dans lequel le moyen de soupape (21) est configuré pour :
déterminer si la pression d'alimentation de la pompe (P) sur le côté positif (15:1) du vérin hydraulique dépasse la première valeur seuil de condition de fonctionnement (21), mais est inférieure à une deuxième valeur seuil de condition de fonctionnement (Z2), et, si tel est le cas, faire varier le degré d'ouverture dans une zone de transition intermédiaire, dans laquelle le débit de fluide du côté négatif (15:2) vers le côté positif (15:1) du vérin hydraulique (4c) à une caractéristique de régulation prédéterminée est progressivement réduit à mesure que la pression d'alimentation de la pompe (P) augmente sur le côté positif (15:1) du vérin hydraulique (4c).

2. Véhicule de manutention de bois (1) selon la revendication 1, dans lequel le moyen de soupape de détection de pression (21) est en outre configuré pour :
déterminer si la pression d'alimentation de la pompe (P) sur le côté positif (15:1) du vérin hydraulique (4c) dépasse la deuxième valeur seuil de condition de fonctionnement (22), et,
si tel est le cas, conduire dans une troisième condition de fonctionnement, dans laquelle le moyen de soupape (21) est complètement ouvert et tout le débit de fluide provenant du côté négatif (15:2) du vérin hydraulique (4c) est dirigé vers le réservoir (16).

3. Véhicule de manutention de bois (1) selon l'une quelconque des revendications 1 à 2, comprenant un premier clapet anti-retour (20), qui est disposé sur le troisième tuyau (15C) pour restreindre l'écoulement de fluide du côté positif (15:1) au côté négatif (15:2) du vérin hydraulique (4c).

4. Véhicule de manutention de bois (1) selon la revendication 3, dans lequel ledit premier clapet anti-retour (20) est sensible à un écoulement de fluide avec une pression d'alimentation de pompe (P) dans le deuxième tuyau (15B) du vérin hydraulique (4c), dans lequel état le troisième tuyau (15C) par l'action du clapet anti-retour est bloqué pour l'écoulement de fluide.

5. Véhicule de manutention de bois (1) selon l'une quelconque des revendications 1 à 4, comprenant un deuxième clapet anti-retour (22), qui est disposé en parallèle avec le moyen de soupape de détection de pression (21) pour diriger un écoulement de fluide avec une pression d'alimentation de pompe (P) dans le deuxième tuyau (15B) au-delà du moyen de soupape de détection de pression (21) et plus loin vers le côté négatif (15:2) du vérin hydraulique.

6. Véhicule de manutention de bois (1) selon l'une quelconque des revendications 1 à 5, dans lequel le moyen de soupape de détection de pression (21) est configuré avec une durée de fonctionnement régénérative (RD) décroissante progressivement en permanence sur la base d'une relation de pression d'alimentation de pompe (xP) entre la première valeur de seuil de condition de fonctionnement (Z1) et la deuxième valeur de seuil de condition de fonctionnement (Z2) qui est inférieure à 0,5 (< 0,5).

7. Véhicule de manutention de bois (1) selon la revendication 6, dans lequel le temps de diminution progressive de la durée de fonctionnement régénératif (RD) est basé sur un rapport de pression d'alimentation de pompe (xP) entre la première valeur seuil de condition de fonctionnement (21) et la deuxième valeur seuil de condition de fonctionnement (Z2) dans l'intervalle de 0,3 à 0,1.

8. Véhicule de manutention de bois (1) selon l'une quelconque des revendications 1 à 7, dans lequel le moyen de soupape de détection de pression (21) comprend une soupape de maintien de charge.

9. Véhicule de manutention de bois (1) selon la revendication 8, dans lequel la valeur de maintien de charge est d'une exécution équilibrée.

10. Pince à bois (4), comprenant un vérin hydraulique (4c) pour actionner la pince à bois, et un système hydraulique (12), comprenant,
un premier tuyau (15A) relié à un côté positif (15:1) du vérin hydraulique,
un deuxième tuyau (15B) relié à un côté négatif (15:2) du vérin hydraulique
**caractérisé en ce que** le système hydraulique (12) comporte,
un troisième tuyau (15C), qui entraîne un écoulement de fluide régénératif du côté négatif (15:2) du vérin hydraulique (4c) vers le côté positif (15:1),
une soupape de détection de pression (21), qui est disposée sur le deuxième tuyau (15B), et
lequel moyen de soupape (21) est configuré pour :
conduire dans un premier état de fonctionnement, dans lequel le moyen de soupape (21) est fermé et l'écoulement de fluide du côté négatif (15:2) vers le côté positif (15:1) du vérin hydraulique est dirigé via ledit troisième tuyau (15C),
recevoir une indication de pression, indiquant une pression d'alimentation de la pompe (P) sur le côté positif (15:1) du vérin hydraulique (4c),
déterminer si la pression d'alimentation de la pompe (P) dépasse une première valeur seuil de condition de fonctionnement (21) et, si tel est le cas, conduire dans une deuxième condition de fonctionnement dans laquelle le moyen de soupape (21) est ouvert et le débit de fluide provenant du côté négatif (15:2) du vérin hydraulique (4c) est destiné à être dirigé vers un réservoir (16),
déterminer si la pression d'alimentation de la pompe (P) dépasse une deuxième valeur seuil de condition de fonctionnement (Z2) et, si tel est le cas, ouvrir complètement ledit moyen de vanne (21),
tant que la pression d'alimentation de la pompe (P) dépasse la première valeur seuil de condition de fonctionnement (21),
mais est inférieure à la deuxième valeur seuil de condition de fonctionnement (Z2), obtenir une durée de fonctionnement régénérative (RD) décroissante progressivement en permanence sur la base d'une relation de pression d'alimentation de pompe présélectionnée (xP) entre la première valeur seuil de condition de fonctionnement (Z1) et la deuxième valeur seuil de condition de fonctionnement (22), étant inférieure à 0,5 (< 0,5) ou de préférence dans l'intervalle de 0,3 à 0,1.
